# EUROPÄISCHE PATENTSCHRIFT

(11) **EP 3 439 811 B1**
(45) Veröffentlichungstag und Bekanntmachung des Hinweises auf die Patenterteilung: **28.07.2021**
(21) Anmeldenummer: 17718493.4
(22) Anmeldetag: 10.04.2017
(51) Int. Cl.: B22C 1/02, B22C 1/16, B22C 1/18, B22C 1/22, B22C 9/08

(54) **VERWENDUNG VON GESCHLOSSEN-PORIGEN MIKRO-KUGELN AUS EXPANDIERTEM PERLIT ALS FÜLLSTOFF FÜR DIE HERSTELLUNG VON FORMKÖRPERN FÜR DIE GIESSEREIINDUSTRIE**
USE OF CLOSED-PORE MICROSPHERES OF EXPANDED PEARLITE AS A FILLER FOR THE PRODUCTION OF MOULDINGS FOR THE FOUNDRY INDUSTRY
UTILISATION DE MICROBILLES À PORES FERMÉS EN PERLITE EXPANSÉE EN TANT QUE CHARGE POUR LA FABRICATION DE CORPS MOULÉS DESTINÉS À L'INDUSTRIE DE LA FONDERIE

(30) Priorität: 08.04.2016 DE 102016205960
(43) Veröffentlichungstag der Anmeldung: 13.02.2019
(73) Patentinhaber: HÜTTENES-ALBERTUS Chemische Werke Gesellschaft mit beschränkter Haftung, 40549 Düsseldorf (DE)
(72) Erfinder: LEHMANN, Sandra, 14476 Potsdam (DE); RIEMANN, Klaus, 31515 Wunstorf (DE); ZIMMER, Nils, 30826 Garbsen (DE); LIEBER, Hermann, 30855 Langenhagen (DE); HÜBERT, Jürgen, 30855 Langenhagen (DE)
(74) Vertreter: Eisenführ Speiser
(86) Internationale Anmeldenummer: PCT/EP2017/058584
(87) Internationale Veröffentlichungsnummer: WO 2017/174826

(56) Entgegenhaltungen:
- EP-A1- 2 697 181
- CN-A- 104 841 848
- CN-A- 105 414 468
- DE-A1-102011 079 692
- DE-B3-102005 025 771

## Beschreibung

Die vorliegende Erfindung betrifft die Verwendung von geschlossen-porigen Mikro-Kugeln aus expandiertem Perlit als Füllstoff für die Herstellung von Formkörpern für die Gießereiindustrie, Zusammensetzungen zur Herstellung von Formkörpern für die Gießereiindustrie, Formkörper für die Gießereiindustrie und ein Verfahren zur Herstellung eines Formkörpers für die Gießereiindustrie.

Bei der Herstellung von metallischen Formteilen in der Gießereiindustrie wird flüssiges Metall in eine Gießform eingefüllt und erstarrt dort. Der Erstarrungsvorgang ist mit einer Verringerung des Metallvolumens verbunden; und es werden deshalb regelmäßig Speiser in oder an der Gießform eingesetzt, um das Volumendefizit bei der Erstarrung des Gussstücks auszugleichen und so eine Lunkerbildung im Gussstück zu verhindern. Die Speiser sind mit dem Gussstück bzw. mit dem gefährdeten Gussstückbereich verbunden und befinden sich für gewöhnlich oberhalb und/oder an der Seite des Formhohlraums.

Hinsichtlich der bisher bekannten Zusammensetzungen zur Herstellung von Speisern für die Gießereiindustrie werden zwei Hauptgruppen unterschieden:
A. Isoliermassen, d.h. formbare und aushärtbare Zusammensetzungen (Massen) zur Herstellung von wärmeisolierenden Speiserumhüllungen oder Isolierkissen bzw. - taschen. Die (ausgehärtete) Isoliermasse nimmt beim Abgießen der Form zuerst etwas Wärme aus dem flüssigen Metall auf, bis sich ein Temperaturausgleich einstellt; von diesem Zeitpunkt an schützt die Isoliermasse das flüssige Gießmetall für eine gewisse Zeit vor weiteren Wärmeverlusten. Aus Isoliermassen geformte Speiser oder Isoliertaschen verzögern somit den Erstarrungsbeginn und fördern die Dichtspeisung eines Gussstücks. Isoliermassen umfassen regelmäßig mindestens einen partikularen (körnigen) Füllstoff und ein Bindemittel.
B. Exotherme Speiserheizmassen, d.h. form- und aushärtbare exotherme Zusammensetzungen (Massen), die sich durch eine aluminothermische oder ähnliche Reaktion während des Abgießens der Form selbst erwärmen. Aus exothermen Speiserheizmassen (auch exotherme Formstoffe genannt) lassen sich Speiser herstellen, die in die Form eingesetzt werden und in Berührung mit der Schmelze Wärme erzeugen können. Die Wärmeabgabe erfolgt dabei aufgrund der aluminothermischen oder ähnlichen Umsetzungsreaktion in der Heizmasse. Die frei werdende Wärme dient in Ausnahmefällen zur Aufheizung des flüssigen Metalls im Speiser, in jedem Falle aber zur (teilweisen) Kompensation der Wärmeverluste. Bei Verwendung von Speisern mit exothermen Heizmassen bleibt das Metall im Vergleich zu Speisern auf der Basis von Isoliermassen (siehe oben A) länger flüssig. Man kann deshalb die Dichtspeisung eines Gussstücks verbessern und gegebenenfalls kleinere Speiser verwenden, so dass der Kreislaufanteil gesenkt und das Gussausbringen erhöht wird. Exotherme Speiserheizmassen sind aber deutlich teurer als Isoliermassen. Exotherme Speiserheizmassen umfassen regelmäßig mindestens einen partikularen (körnigen) Füllstoff, ein Bindemittel, einen relativ hohen Anteil an einem oxidierbaren Metall, ein Oxidationsmittel für das oxidierbare Metall (z.B. Eisen- und/oder Manganoxid, Kalium- oder Natriumnitrat) sowie Zündmittel. Das oxidierbare Metall ist vorzugsweise ein unedles Metall. Bevorzugt ist das oxidierbare Metall ausgewählt aus der Gruppe bestehend aus Aluminium, Magnesium, Calcium und Silicium.

In Speisermassen zur Herstellung von Speisern und in den daraus hergestellten Speisern selbst werden als partikulare (körnigen) Füllstoffe regelmäßig Leichtfüllstoffe eingesetzt, welche bei einer hohen Temperaturbeständigkeit und geringem Gewicht eine gute isolierende Wirkung zeigen sollen.

Aus der DE 10 2005 025 771 ist ein isolierender Speiser umfassend keramische Hohlkugeln, Glas-Hohlkugeln mit einer Schüttdichte von weniger als 0,3 g/cm³, ausgehärtetes Bindemittel und gegebenenfalls Fasermaterial bekannt. Gegebenenfalls enthält der Speiser gemäß DE 10 2005 025 771 weitere Materialien, die sich als Füllstoffe bezeichnen lassen.

In der industriellen Praxis werden in Speisern häufig Spheres (insbesondere solche aus Flugasche) eingesetzt. Diese lassen sich in verschiedene Qualitätsstufen einteilen, die sich insbesondere durch den Al₂O₃-Gehalt und den Anteil an Alkalien- und Erdalkalien sowie Begleitelementen wie Eisen ergeben. Insbesondere für den Einsatzbereich Kupfer-, Eisen- und Stahlguss werden in der Praxis besonders hochwertige Spheresqualitäten benötigt; diese sind jedoch mengenmäßig begrenzt bzw. sehr teuer, so dass ein ständiger Bedarf an reproduzierbar verfügbaren Alternativen besteht.

Als Leichtfüllstoffe bekannt sind z.B. Blähglas der Fa. Liaver und Schaumglas der Fa. Poraver, Glashohlkugeln des Typs K20 der Fa. Omega sowie offen-porige geblähte Perlite. Perlit ist in die Gruppe der sauren vulkanischen Gesteine, der Rhyolithe einzuordnen. Perlite bestehen aus glasartigen körnig-schaligen Kügelchen bis Erbsengröße mit einer Schüttdichte von ca. 900-1000kg/m³. Sie enthalten Wasser, welches in einem technischen Prozess im Flugstrom einer Flamme ggf. unter Einleitung von Luft, sauerstoffangereicherter Luft oder Sauerstoff verdampft und so zum Blähen der Perlite führt. Die thermische Behandlung findet üblicherweise im Temperaturbereich von ca. 350 °C bis zu 1150 °C statt. Dabei dehnen sich die Perlite um das bis zu Zwanzigfache des Ursprungvolumens. Durch den Blähprozess entstehen offen-porige Spährolithstrukturen und die geblähten offen-porigen Perlite weisen Schüttdichten von 50 bis 500 kg/m³, in Abhängigkeit von der Korngröße, auf. Aufgrund des glasartigen Grundmaterials und der geblähten Struktur zeigen offen-porige, geblähte Perlite sehr geringe Wärmeleitfähigkeiten von ca. 0,05 bis 0,09 W/mK. Aufgrund eines geringen Schüttgewichts und einer geringen Wärmeleitfähigkeit wird offen-poriger geblähter Perlit als Isolationsmaterial in der Baustoffindustrie, aber auch in der Feuerfestindustrie für Isoliersteine im Temperatureinsatz bis 1100 °C eingesetzt. Des Weiteren ist der Einsatz von offen-porigen, geblähten Perliten in Speisern, z.B. DE2121353A (Baur), WO2006097278A1 (AS Lüngen) und US20030032701A1 (Gough) bekannt. Wenn "geblähter Perlit" oder "expandierter Perlit" beschrieben wird, ohne die Porigkeit des Materials explizit zu beschreiben, muss davon ausgegangen werden, dass immer geblähtes offen-poriges Perlit gemeint ist, da dies bis vor wenigen Jahren die einzige Form von geblähten Perlit gewesen ist.

In der EP 2 697 181 A1 (Veröffentlichungstag der Anmeldung 19.02.2014) wird wohl erstmalig ein Verfahren zum geschlossenzelligen Blähen von Perlit beschrieben. In den Absätzen [0005] und [0006] des Dokumentes wird beschrieben, dass die in dem damaligen Stand der Technik bekannten Perlitöfen zu offenporigem Granulat führen. In der EP 2 899 174 A2 (Anmeldetag 02.01.2015) wird beschrieben, dass das Blähen von Perlit seit Jahren bekannt sei, aber dass bisherige Blähmethoden zu offenzelligen, zerrissenen Perliten führen (Absatz [0019]).

In der DE 11 2011 103 297 T5 wird eine Manschette aus zusammengesetzten Schichten beschrieben, welche als Speiser in einem Schmelzgussverfahren eingesetzt wird und die es ermöglicht, Wärmeverluste zwischen ihren Wänden und dem Formsand zu reduzieren. Als Füllstoffe werden hohle Mikrokugeln oder alternativ auch andere Materialien wie beispielsweise expandiertes Perlit beschrieben. Es ist davon auszugehen, dass der in der in der DE 11 2011 103 297 T5 verwendete Begriff "expandierter Perlit" offenzellige bzw. offen-porige, zerrissene Perlite bezeichnet, da der veröffentlichte Text lange vor dem Bekanntwerden der ersten Herstellungsmethoden von geschlossen-porigen Perliten verfasst wurde.

Die EP 0 140 900 B1 offenbart die Verwendung einer wärmeisolierenden Platte, die aus einer homogenen Mischung aus expandierten Perlitteilchen besteht. Zwar wird auf die Porigkeit der expandierten Perlitteilchen nicht näher eingegangen, es muss allerdings davon ausgegangen werden, dass offenzellige bzw. offen-porige, zerrissene Perlite verwendet wurden, vgl. die vorstehenden Ausführungen. Die Verwendung dieser Perlite für die Herstellung von Formkörpern für die Gießereiindustrie wird nicht beschrieben.

In der AT 371 092 B wird ein Verfahren zur Herstellung von geschlossenen Mikro-Kugeln aus Perlit beschrieben. Bei den hergestellten geschlossenen Mikro-Kugeln handelt es sich allerdings nicht um geschlossen-porige Mikro-Kugeln aus expandiertem Perlit, sondern um Mikrohohlkugeln, die eine Außenhülle aus Perlit mit definierter Wandstärke aufweisen und ansonsten hohl sind (sphärische Partikel).

In der AT 372 367 B mit dem Titel "Feuerfester, exothermer, wärmeisolierender Formkörper" wird die Verwendung von expandiertem Perlit beschrieben. Es muss davon ausgegangen werden, dass unter dem verwendeten Begriff "expandierter Perlit" offenzellige bzw. offen-porige, zerrissene Perlite verstanden werden, da der veröffentlichte Text lange vor dem Bekanntwerden der ersten Herstellungsmethoden von geschlossen-porigen Perliten verfasst wurde.

In der US 4,183,980 und der US 4,255,489 werden Perlite beschrieben, die mit Polydimethylsiloxan beschichtet sind. Diese beschichteten Perlite werden als Füllstoffe für Kunststoffe verwendet, um die Dichte des Kunststoffes zu reduzieren. Die offenbarten beschichteten Perlite werden als nicht-porös ("non-porous") bezeichnet.

In der EP 0 353 860 werden expandierte Perlite beschrieben, bei denen es sich um sphärische Partikel handelt und die nicht porös sind. In dem Dokument wird beschrieben, dass die hergestellten Partikel als Füllstoffe für zahlreiche Anwendungen eingesetzt werden können. Die Verwendung dieser Perlite für die Herstellung von Formkörpern für die Gießereiindustrie wird allerdings nicht beschrieben.

In der DE 2121353A wird die Verwendung von aus Perlit bestehenden Hohlkügelchen beschrieben, wobei die Oberfläche der Hohlkügelchen mit einem feuerfesten Überzug versehen ist. Durch den feuerfesten Überzug wird die Temperaturbeständigkeit der Hohlkügelchen verbessert und die äußeren Poren des offen-porigen Perlits werden geschlossen, wodurch eine Verminderung der Bindemittelmenge möglich wird, da das Bindemittel nicht in die Poren des Perlits aufgenommen wird.

In der WO2006097278A1 wird eine Formmasse für die Herstellung von Formkörpern für die Gießereiindustrie beschrieben, die einen porösen feuerfesten Stoff mit durchgehender offener Porenstruktur aufweist. Als poröser feuerfester Stoff mit durchgehender offener Porenstruktur wird neben Bimsstein, Blähschiefer, Vermiculit, Kesselsand oder Schaumlava auch Perlit erwähnt.

In der US20030032701A1 werden hitzebeständige Isolationsmaterialien beschrieben, die einen hitzebeständigen Leichtfüllstoff mit einer Schüttdichte von weniger als 0,4 g/cm³ aufweisen, wobei es sich bei dem Leichtfüllstoff um kalziniertes Kieselgur, Kieselgur, expandiertes Vermiculit oder Perlit handeln kann. Die Verwendung der Isolationsmaterialien in der Gießereiindustrie wird nicht beschrieben.

In der CN 105 414 468 A und der CN 104 841 848 A werden Sandzusammensetzungen für die Gießerei beschrieben, die geschlossen-porige Perlite enthalten.

Durch die in den letzen Jahren erfolgte Weiterentwicklung in der Gießereiindustrie haben sich die Anforderungen an die verwendeten Speisermaterialien deutlich erhöht. So müssen die Speiser heute aufgrund der immer häufiger eingesetzten Hochdruckformanlagen in den Gießereien deutlich höheren Drücken standhalten als vor einigen Jahren. Dazu kommt, dass insbesondere für den Einsatz in Speisern, bei denen ein Speiserunterteil in ein Speiseroberteil eingeschoben wird, hohe Festigkeiten bei gleichzeitig hohem E-Modul notwendig sind. Solche Speiser sind im Handel unter der Bezeichnung "Telespeiser" von der CHEMEX GmbH, Deutschland, erhältlich und werden beispielsweise in der EP 1184104 B1 näher beschrieben.

Es hat sich gezeigt, dass die bisher produzierten offen-porigen, geblähten Perlite den gestiegenen Anforderungen an die Speisermaterialien nicht standhalten konnten und daher für den Einsatz in Speisern nicht ohne weitere Modifizierung geeignet sind.

Es war daher die Aufgabe der vorliegenden Erfindung, einen Leichtfüllstoff anzugeben, der für die Herstellung von Formkörpern als zumindest teilweiser Ersatz für die derzeit vorwiegend verwendeten Leichtfüllstoffe verwendet werden kann, wobei vorzugsweise die Festigkeit und der E-Modul der hergestellten Formteile verbessert werden und die Formkörper eine bessere Isolationswirkung aufweisen. Der Leichtfüllstoff sollte sich dabei durch eine hohe Verfügbarkeit in gleichbleibender Qualität auszeichnen.

Die gestellte Aufgabe wird erfindungsgemäß gelöst durch die Verwendung von geschlossen-porigen, an ihrer Oberfläche geschlossenen Mikro-Kugeln aus expandiertem Perlit als Füllstoff für die Herstellung von Formkörpern für die Gießereiindustrie.

Geschlossen-porige Mikro-Kugeln aus expandiertem Perlit weisen ein außergewöhnlich leichtes Gewicht auf. Das Blähen von Perlit ist seit Jahren bekannt. Die bisherige Blähmethode führt aber zu offen-porigen, zerrissenen Perliten. Vorliegend werden neuartige geschlossen-porige Mikro-Kugeln aus expandiertem Perlit eingesetzt, die aus Kugeln mit geschlossenen Hohlräumen bestehen, wobei die Hohlräume nicht über Kanäle oder Öffnungen miteinander verbunden sind. Das Verfahren zur Herstellung dieser neuartigen Perlite erfolgt mehrstufig in einem Fallofen mit mehreren Temperaturzonen. Dabei wird Perlitsand zunächst mittels einer Sieblinie in verschiedene Korngröße sortiert. Jede einzelne Korngröße wird anschließend in einem Rieselkanal mehreren Temperaturzonen ausgesetzt, die ansteigende Temperaturen aufweisen, wodurch die Perlitkörner gebläht werden.

Überraschenderweise hat es sich in eigenen Untersuchungen gezeigt, dass Formkörper für die Gießereiindustrie, die geschlossen-porige Mikro-Kugeln aus expandiertem Perlit als Füllstoff enthalten, besonders gute Eigenschaften aufweisen. Insbesondere weisen die Formkörper eine verbesserte Stabilität und Isolierwirkung auf.

Anders als bei sphärischen Partikeln, die ballartig sind und lediglich eine Außenhülle besitzen, haben geschlossen-porige Mikro-Kugeln aus expandiertem Perlit eine aus den Wänden der einzelnen Poren gebildete Struktur im Inneren der Mikro-Kugeln. Hierdurch weisen Formkörper, die geschlossen-porigen Mikro-Kugeln aus expandiertem Perlit als Füllstoff enthalten, eine höhere Stabilität auf.

Es hat sich überraschenderweise gezeigt, dass geschlossen-porige Mikro-Kugeln aus expandiertem Perlit im Vergleich zu offen-porigen, zerrissenen Perliten eine höhere Stabilität aufweisen und dass weniger Bindemittel benötigt wird, um Formkörper herzustellen. So kann bei gleicher Bindemittelmenge eine höhere Festigkeit des resultierenden Formkörpers erhalten werden bzw. es wird bei gleicher oder leicht gesteigerter Festigkeit eine geringere Bindemittelmenge benötigt.

Perlit ist ein Gestein, das in Regionen mit Vulkanaktivität vorkommt und aufgrund von Vulkanaktivität immer neu generiert wird. Die bedeutendsten Perlit-Vorkommen sind im Mittelmeer-Raum, Nord- und Mittelamerika, Polynesien, Neuseeland und China zu finden. Perlit weist daher eine hohe Verfügbarkeit auf.

Bevorzugt ist eine erfindungsgemäße Verwendung, wobei die Mikro-Kugeln erhältlich sind durch ein Verfahren, bei dem ein Perlitsand in einem Rieselkanal mit mehrstufigen Temperaturzonen aufgebläht wird, wobei die Temperaturzonen des Rieselkanals vorzugsweise elektrisch beheizt werden.

In üblicherweise verwendeten technischen Prozessen zur Herstellung von offen-porigen geblähten Perliten wird der Perlitsand im Flugstrom einer Flamme ggf. unter Einleitung von Luft, sauerstoffangereicherter Luft oder Sauerstoff oder im Heißgasstrom nach dem Gegenstromprinzip gebläht. Es hat sich gezeigt, dass hierdurch keine genaue Temperatursteuerung des Blähprozesses durchgeführt werden kann. Es ist daher bevorzugt, wenn der Perlitsand während des Blähverfahrens nicht im Flugstrom einer Flamme bzw. nicht durch eine Flamme und/oder nicht im Heißgasstrom erhitzt wird.

Es ist erfindungsgemäß bevorzugt, wenn der Perlitsand vor der Behandlung in der mehrstufigen Temperaturzone in verschiedene Korngröße sortiert wird und nur Perlitsand mit einer bestimmten Korngröße verwendet wird. Das Sortieren in verschiedene Korngrößen erfolgt vorzugsweise mittels einer Sieblinie.

Durch gezielte Steuerung des im Blähverfahren eingesetzten Perlitsandes lässt sich auch die Korngröße des geblähten Perlits steuern.

Bevorzugt ist eine erfindungsgemäße Verwendung, wobei die geschlossen-porigen Mikro-Kugeln aus expandiertem Perlit eine Korngröße d50 von 180 bis 300 µm, vorzugsweise von 190 bis 270 µm, besonders bevorzugt von 200 bis 250 µm aufweisen.

Erfindungsgemäß bevorzugt ist eine erfindungsgemäße Verwendung, wobei die geschlossen-porigen Mikro-Kugeln aus expandiertem Perlit
(a) eine Korngröße d10 von 20 bis 170 µm, vorzugsweise von 80 bis 160 µm, besonders bevorzugt von 100 bis 140 µm aufweisen
   und/oder
(b) eine Korngröße d90 von 280 bis 600 µm, vorzugsweise von 290 bis 450 µm, besonders bevorzugt von 300 bis 400 µm aufweisen.

Die Korngrößen werden durch Siebanalyse nach DIN 66165 bestimmt.

In eigenen Untersuchungen hat es sich überraschenderweise gezeigt, dass die Verwendung von geblähtem Perlit mit den oben angegebenen Korngrößen besonders vorteilhaft für die Herstellung von Formkörpern für die Gießereiindustrie ist.

Erfindungsgemäß sind die Mikro-Kugeln an ihrer Oberfläche geschlossen. Entsprechend ist im Rahmen der vorliegenden Erfindung eine Verwendung von geschlossen-porigen Mikro-Kugeln aus expandiertem Perlit als Füllstoff für die Herstellung von Formkörpern für die Gießereiindustrie vorgesehen, wobei die Mikro-Kugeln an ihrer Oberfläche geschlossen sind.

In einigen Ausgestaltungen der vorliegenden Erfindung sind Mikro-Kugeln bevorzugt, die an ihrer Oberfläche geschlossen sind, und die Oberfläche im amorphen und nicht kristallinen Zustand vorliegt.

Es hat sich überraschenderweise gezeigt, dass geschlossen-porige Mikro-Kugeln aus expandiertem Perlit mit einer geschlossenen Oberfläche im Gegensatz zu offen-porigen, zerrissenen Perliten den Vorteil aufweisen, dass für die Herstellung von Formkörpern weniger Bindemittel benötigt wird. Hierdurch kann weniger Bindemittel verwendet werden oder bei gleicher Bindemittelmenge wird eine bessere Haftung erreicht. Außerdem wird durch die geschlossene Oberfläche eine höhere Festigkeit der Mikro-Kugeln erhalten. Darüber hinaus hat sich überraschenderweise gezeigt, dass diese Mikro-Kugeln eine besonders gute Isolationswirkung aufweisen.

Im Vergleich zu herkömmlich geblähtem Perlit, der offen-porig ist, zeichnen sich die erfindungsgemäß zu verwendenden Perlite durch eine geschlossen-porige Kugeloberfläche und eine deutlich stabilere innere Partikelstruktur aus. Die geschlossen-porigen Perlite weisen eine geschlossene Schaumstruktur mit voneinander getrennten Poren auf und haben eine nahezu glatte Oberfläche.

Erfindungsgemäß bevorzugt wird eine Verwendung, wobei die Mikro-Kugeln einen Quotienten aus Reindichte zu Rohdichte von größer als 1,8, vorzugsweise größer als 2,5, weiter bevorzugt größer als 3,0, besonders bevorzugt größer als 4,0, insbesondere bevorzugt größer als 5,0 aufweisen, wobei die Rohdichte und die Reindichte mit dem Heliumpyknometer bestimmt werden.

Die Reindichte bezeichnet die Dichte des stofflichen Teils der Mikro-Kugeln, ohne das Volumen der enthaltenen Hohlräume zu berücksichtigen. Die Reindichte wird bestimmt, indem das Material solange zerkleinert und gemahlen wird, bis seine Teilchen keine Poren mehr enthalten. Anschließend wird von dem zerkleinerten bzw. gemahlenen Stoff die Dichte mittels Heliumpyknometer bestimmt. Helium wird verwendet, da es ein inertes Gas ist und einen extrem kleinen Molekulardurchmesser besitzt, sodass es alle zugänglichen Hohlräume einer Probe füllt.

Die Rohdichte ist die Dichte eines porösen Festkörpers basierend auf dem Volumen einschließlich der Porenräume. Die Rohdichte der Mikro-Kugeln wird mittels Heliumpyknometer bestimmt, ohne dass die Mikro-Kugeln zerkleinert oder gemahlen werden.

Ein hoher Quotient aus Reindichte zu Rohdichte ist ein Maß für die Geschlossen-Porigkeit von porösen Körpern.

Ebenfalls bevorzugt ist die erfindungsgemäße Verwendung, wobei die geschlossen-porigen Mikro-Kugeln eine Porosität von mehr als 70 %, vorzugsweise mehr als 75 %, besonders bevorzugt mehr als 80 % aufweisen.

Die Porosität wird dabei gemäß der allgemein üblichen Formel Porosität = (1 - Rohdichte / Reindichte) x 100% berechnet und stellt das Verhältnis von Hohlraumvolumen zu Gesamtvolumen eines Stoffes dar.

Ebenfalls bevorzugt ist eine erfindungsgemäße Verwendung, wobei die geschlossen-porigen, an ihrer Oberfläche geschlossenen, Mikro-Kugeln eine Wasseraufnahme nach Enslin nach 300 Sekunden von weniger als 2,0 mL/g aufweisen, vorzugsweise von weniger als 1,5 mL/g aufweisen, besonders bevorzugt von weniger als 1,3 mL/g aufweisen, ganz besonders bevorzugt von weniger als 1,2 mL/g aufweisen. Die Durchführung und Auswertung erfolgt dabei gemäß DIN 18132:12-04.

Die Messung der Wasseraufnahme ist dem Fachmann geläufig. Die Methode bedient sich der sogenannten Enslin-Apparatur, bei der eine Glasfilternutsche über einen Schlauch mit einer graduierte Pipette verbunden ist. Die Pipette ist genau horizontal so montiert, dass sie auf gleicher Höhe mit der Glasfritte liegt. Eine Wasseraufnahme von 1,5 mL/g entspricht somit einer Wasseraufnahme von 1,5 ml Wasser pro 1 g Mikro-Kugeln.

Besonders bevorzugt ist eine erfindungsgemäße Verwendung von Mikro-Kugeln, wobei die Mikro-Kugeln eine Kornfestigkeit von über 1,3 N/mm², vorzugsweise über 1,6 N/mm², besonders bevorzugt über 1,9 N/mm², ganz besonders bevorzugt über 3 N/mm² aufweisen.

Die Bestimmung der Kornfestigkeit erfolgte in Anlehnung an die DIN EN 13055-1 Anhang A, Verfahren 1 (2*30 sec rütteln mit Amplitude 0,5mm).

Durch die Verwendung von Mikro-Kugeln mit einer hohen Kornfestigkeit ist es - neben weiteren Vorteilen - möglich, den Gehalt an Mikro-Kugeln in den Formkörpern für die Gießereiindustrie (zu bevorzugten Formkörpern siehe unten) zu erhöhen, ohne dass die Festigkeit der Formkörper abnimmt. Hierdurch können die Formkörper dem metallostatischen Druck der Metallschmerze standhalten.

In einer bevorzugten Ausgestaltung der erfindungsgemäßen Verwendung von geschlossen-porigen Mikro-Kugeln weisen die Mikro-Kugeln eine Wärmeleitfähigkeit von weniger als oder gleich 0,07 W/mK, bevorzugt weniger als oder gleich 0,06 W/mK, besonders bevorzugt von weniger als oder gleich 0,05 W/mK auf.

Es hat sich gezeigt, dass erfindungsgemäß zu verwendende geschlossen-porige Mikro-Kugeln aus expandiertem Perlit eine deutlich geringere Wärmeleitfähigkeit aufweisen als offen-porige Mikro-Kugeln. Insbesondere beim Einsatz der geschlossen-porigen Mikro-Kugeln in Speisern kann die Isolierwirkung des Speisers durch die geringere Wärmeleitfähigkeit signifikant gesteigert werden.

In einer erfindungsgemäß bevorzugten Ausgestaltung der Verwendung von geschlossen-porigen Mikro-Kugeln ist es bevorzugt, dass die Mikro-Kugeln eine Schüttdichte von unter 500 kg/m³ aufweisen, vorzugsweise eine Schüttdichte von unter 350 kg/m³, besonders unter 300 kg/m³ aufweisen.

In einer erfindungsgemäß bevorzugten Ausgestaltung der Verwendung von geschlossen-porigen Mikro-Kugeln, ist es bevorzugt, dass die Mikro-Kugeln eine Schüttdichte von 100 bis 500 kg/m³ aufweisen, vorzugsweise eine Schüttdichte von 200 bis 350 kg/m³, besonders bevorzugt von 300 bis 350 kg/m³ aufweisen.

Die Schüttdichte wird nach DIN EN ISO 60 2000-1 bestimmt.

Bei geringen Schüttdichten unterhalb von 500 kg/m³ weisen die unter Verwendung der erfindungsgemäß zu verwendenden Mikro-Kugeln hergestellten Zusammensetzungen und Formteile eine besonders geringe Dichte auf.

Bevorzugt wird eine erfindungsgemäße Verwendung, wobei die Mikro-Kugeln eine Sintertemperatur von über 800 °C aufweisen, vorzugsweise von 900 °C bis 1150 °C, weiter bevorzugt von 1050 bis 1100 °C aufweisen.

Bevorzugt wird eine erfindungsgemäße Verwendung, wobei die Mikro-Kugeln einen Feuchtegehalt von unter 0,5 %, vorzugsweise unter 0,3 %, besonders bevorzugt unter 0,05 % aufweisen.

Bei einem zu hohen Feuchtegehalt kann es während der Verwendung der hergestellten Formkörper in der Gießereiindustrie zur schlagartigen Wasserdampffreigabe kommen, woraus Gießfehler und/oder Beschädigungen der Formkörper resultieren können oder es kann bei einem hohem Wassergehalt zu Explosionen führen.

Die geschlossen-porigen Mikro-Kugeln aus expandiertem Perlit haben im Gegensatz zu offen-porigem, zerrissenem Perlit eine sehr geringe Wasseraufnahmefähigkeit. Um offen-porige Perlite in Bezug auf die Wasseraufnahmefähigkeit zu verbessern, wurden diese bisher ummantelt, beispielsweise mit Bitumen. Eine andere Variante besteht darin, offen-porige Perlite mit Paraffin zu imprägnieren oder mit Silikon zu veredeln. Die solchermaßen behandelten Perlite eignen sich aber wenig zur Verwendung als Füllstoff für die Herstellung von Formkörpern für die Gießereiindustrie, da die Druckfestigkeit dieser Produkte trotz der Behandlung gering ist und zudem bei einigen Produkten keine ausreichend hohe Hitzebeständigkeit vorliegt. Vorliegend ist es erfindungsgemäß bevorzugt, wenn die geschlossen-porigen Mikro-Kugeln ohne Zusätze hergestellt werden und somit vollständig aus Perlit bestehen. Außerdem sind speziell behandelte Perlite vergleichsweise teuer, sodass ein wirtschaftlicher Nachteil bei der Verwendung von behandelten Perliten entsteht.

Gemäß einer bevorzugten Ausgestaltung der vorliegenden Erfindung enthalten geschlossen-porige Mikro-Kugeln aus expandiertem Perlit SiO₂, Al₂O₃ und K₂O, vorzugsweise SiO₂, Al₂O₃, K₂O, Na₂O, CaO und FeO.

Dabei ist es bevorzugt, dass die Mikro-Kugeln 60 bis 85 Gewichtsprozent SiO₂, 9 bis 15 Gewichtsprozent Al₂O₃ und 3 bis 7 Gewichtsprozent K₂O umfassen, bezogen auf das Gesamtgewicht der Mikro-Kugeln, vorzugsweise 60 bis 85 Gewichtsprozent SiO₂, 9 bis 15 Gewichtsprozent Al₂O₃ und 3 bis 7 Gewichtsprozent K₂O, 1 bis 6 Gewichtsprozent Na₂O, 0,1 bis 2 Gewichtsprozent CaO und 0,1 bis 2 Gewichtsprozent FeO, bezogen auf das Gesamtgewicht der Mikro-Kugeln.

Gemäß einer bevorzugten Ausgestaltung der vorliegenden Erfindung werden die Mikro-Kugeln in Kombination mit Blähglas verwendet.

Dabei hat es sich als besonders vorteilhaft herausgestellt und ist daher besonders bevorzugt, wenn die zu verwendenden Mikro-Kugeln in Kombination mit Blähgläsern mit zwei unterschiedlichen Korngrößen verwendet werden. Dabei ist besonders bevorzugt, wenn ein erstes Blähglas eine Korngröße im Bereich von 0,1 bis 0,3 mm aufweist und ein zweites Blähglas eine Korngröße im Bereich von 0,25 bis 0,5 mm aufweist.

Ebenfalls bevorzugt ist eine erfindungsgemäße Verwendung, wobei das Gewichtsverhältnis zwischen zu verwendenden Mikro-Kugeln und dem Blähglas bzw. sämtlichen Blähgläsern 1:1 bis 1:2, vorzugsweise bei 1:1,5 bis 1:1,9 liegt.

Erfindungsgemäß besonders bevorzugt ist die Verwendung von geschlossen-porigen Mikro-Kugeln aus expandiertem Perlit als Füllstoff für die Herstellung von Formkörpern für die Gießereiindustrie, wobei die Mikro-Kugeln an ihrer Oberfläche geschlossen sind und eine Kornfestigkeit von über 1,9 N/mm² aufweisen, und wobei die Mikro-Kugeln in Kombination mit zwei verschiedenen Blähgläsern mit zwei unterschiedlichen Korngrößen verwendet werden. Dabei ist besonders bevorzugt, wenn das erste Blähglas eine Korngröße im Bereich von 0,1 bis 0,3 mm aufweist und das zweite Blähglas eine Korngröße im Bereich von 0,25 bis 0,5 mm aufweisen, und die Mischung aus Mikro-Kugeln und Blähgläsern für die Herstellung von Formkörpern mittels Cold-Box-Verfahren verwendet wird.

Gemäß einer bevorzugten Ausgestaltung der vorliegenden Erfindung werden die Mikro-Kugeln in Kombination mit kalzinierter Reisschalenasche verwendet.

Ebenfalls bevorzugt ist die erfindungsgemäße Verwendung, bei der die Mikro-Kugeln in Kombination mit Blähglas und kalzinierter Reisschalenasche verwendet werden. Dabei ist insbesondere bevorzugt, wenn der Anteil an kalzinierter Reisschalenasche im Bereich von 0,5 bis 5 Gewichtsprozent, vorzugsweise im Bereich von 1 bis 3 Gewichtsprozent vorliegt, bezogen auf das Gesamtgewicht aus Mikro-Kugeln, Blähglas und kalzinierter Reisschalenasche. Wobei vorzugsweise das Gewichtsverhältnis zwischen Mikro-Kugeln und dem Blähglas bzw. sämtlichen Blähgläsern 1:1 bis 1:2, vorzugsweise bei 1:1,5 bis 1:1,9 liegt und das Blähglas vorzugsweise eine Korngröße im Bereich von 0,1 bis 0,3 mm aufweist. Diese Mischung aus Mikro-Kugeln, Blähglas und kalzinierter Reisschalenasche ist besonders gut für die Herstellung von Formkörpern mit Wasserglas als Bindemittel geeignet.

Bevorzugt wird kalzinierte Reisschalenasche eingesetzt wie in DE 10 2011 079 692 beschrieben. Die Herstellung der kalzinierten Reisschalenasche erfolgt bevorzugt gemäß dem Verfahren aus DE 10 2011 079 692.

Ebenfalls bevorzugt ist eine erfindungsgemäße Verwendung, wobei die Mikro-Kugeln in Kombination mit einem organischen oder anorganischen Binder oder einer Mischung aus organischem oder anorganischem Binder verwendet werden und der Binder vorzugsweise ausgewählt ist, aus der Gruppe bestehend aus Wasserglas, Phenol-Formaldehyd-Harzen, Zwei-Komponenten-Systemen, die eine freie Hydroxylgruppen (OH-Gruppen) enthaltende Polyolkomponente (bevorzugt ein Phenolharz) und ein Poly-Isocyanat als Reaktionspartner umfassen, und Stärke.

Freie Hydroxylgruppen bedeutet bei den oben beschriebenen Zwei-Komponenten-Systemen, dass die Hydroxylgruppen nicht verethert sind. Bevorzugte als Polyolkomponente einsetzbare Phenolharze sind ortho-kondensierte phenolische Resole (auch als Benzyletherharze bezeichnet) wie z.B. in EP 1 057 554 B1 beschrieben. Der Begriff "ortho-kondensiertes phenolisches Resol" bzw. Benzyletherharz umfasst gemäß dem üblichen fachmännischen Verständnis auch Verbindungen mit der Struktur gemäß dem Lehrbuch "Phenolic Resins: A Century of progress" (Herausgeber: L. Pilato, Verlag: Springer, Jahr der Veröffentlichung: 2010) Seite 477, Figur 18.22 sowie Verbindungen, die gemäß dem VDG-Merkblatt R 305 "Urethan-Cold-Box-Verfahren" (Februar 1998) als "Benzyletherharz (Ortho-Phenol-Resol)" bezeichnet werden bzw. unter die in Absatz 2.2 angegebene Formel für Benzyletherpolyole fallen.

Unter den Zwei-Komponenten-Systemen, die eine freie Hydroxylgruppen (OH-Gruppen) enthaltende Polyolkomponente (bevorzugt ein Phenolharz) und ein Poly-Isocyanat als Reaktionspartner umfassen, sind Cold-Box-Bindemittel bevorzugt. Cold-Box-Bindemittel sind Bindemittel, deren Aushärtung durch in Nebel- oder Dampfform zugeführte tertiäre Amine als Katalysator erfolgt ("Begasung").

Die einzelnen Komponenten der Zwei-Komponenten-Systeme sind gegebenenfalls in einem Lösungsmittel gelöst. Bei der Auswahl der Lösungsmittel für die Polyolkomponente und Poly-Isocyanat-Komponente ist zu beachten, dass die Lösungsmittel nicht in relevanter Weise an der Reaktion zwischen dem Poly-Isocyanat und dem Polyol in Gegenwart eines Katalysators teilnehmen, diese Reaktion aber sehr wohl beeinflussen können. Als geeignete Lösungsmittel für die Cold-Box-Bindemittel-Komponenten können insbesondere a) Fettsäuremethylester, vorzugsweise Rapsölmethylester, und/oder b) Alkylsilikate ( vorzugsweise Tetraethylsilikat (TEOS)), Alkylsilikat-Oligomere oder entsprechende Gemische aus Alkylsilikat(en) mit/oder Alkylsilikat-Oligomer(en) eingesetzt werden. Die Verwendung von Alkylsilikaten, Alkylsilikat-Oligomeren und insbesondere Tetraethylsilikat (TEOS) als Lösungsmittel für Cold-Box-Bindemittel wird beispielsweise in der EP 1 057 554 B1 beschrieben. Die Verwendung von Fettsäuremethylestern und insbesondere Rapsölmethylester wird in der EP 0 771 599 B2 beschrieben.

Bevorzugt ist eine erfindungsgemäße Verwendung, wobei die Mikro-Kugeln in Kombination mit einem organischen Bindemittel, vorzugsweise einem Cold-Box-Bindemittel, eingesetzt werden und wobei in das Aushärten des Cold-Box-Bindemittels durch Begasung mit einem organischen Amin erfolgt.

Darüber hinaus ist es bevorzugt, dass die Formkörper für die Gießereiindustrie ausgewählt sind aus der Gruppe bestehend aus isolierenden oder exothermen Speisern, Speiserumhüllungen, Speisereinsätzen, Speiserkappen, Fülltrichter, Zufuhrelementen und Heizkissen handelt.

Besonders bevorzugt ist eine erfindungsgemäße Verwendung zur Herstellung von isolierenden oder exothermen Speisern für den Nicht-Eisenguss, vorzugsweise isolierende Speiser für den Aluminiumguss.

Insbesondere bevorzugt ist dabei eine erfindungsgemäße Verwendung zur Herstellung von Formkörpern mittels Cold-Box-Verfahren, bevorzugt dem Poylurethan-Cold-Box-Verfahren. Im Rahmen der vorliegenden Erfindung werden als Cold-Box-Verfahren solche Verfahren zur Herstellung von Speisern verstanden, bei denen prinzipiell kalte, also nicht erwärmte oder heiße, Formen zur Speiserherstellung verwendet werden.Das Polyurethan-Cold-Box-Verfahren ist im Stand der Technik bekannt, siehe z.B. das VDG Merkblatt R 305 "Urethan-Cold-Box-Verfahren" (Februar 1998).

Zur Herstellung von Speisern nach dem Polyurethan-Cold-Box-Verfahren (auch als "Urethan-Cold-Box-Verfahren bezeichnet) wird zunächst eine Zusammensetzung (Speisermasse) hergestellt, indem erfindungsgemäß zu verwendende geschlossen-porigen Mikro-Kugeln aus expandiertem Perlit und optional weitere Bestandteile (z.B. weitere Füllstoffe wie oben beschrieben) vermischt werden mit den beiden Komponenten eines Zweikomponenten-Bindemittelsystems, das eine freie Hydroxylgruppen (OH-Gruppen) enthaltende Polyolkomponente (bevorzugt ein Phenolharz) und ein Poly-Isocyanat als Reaktionspartner umfassen. Die Formstoffmischung wird sodann geformt. Danach erfolgt unter kurzzeitiger Begasung mit einem tertiären Amin als Katalysator die Härtung der geformten Formstoffmischung. Anschließend kann der Speiser dem Formwerkzeug entnommen und verwendet werden.

Besonders bevorzugt ist eine erfindungsgemäße Verwendung von geschlossen-porigen Mikro-Kugeln aus expandiertem Perlit, wobei die Mikro-Kugeln an ihrer Oberfläche geschlossen sind, für die Herstellung von Formkörpern mittels Cold-Box-Verfahren für die Gießereiindustrie für den Nicht-Eisenguss, vorzugsweise für den Aluminiumguss, wobei die Mikro-Kugeln eine Kornfestigkeit von über 1,9 N/mm² aufweisen, in Kombination mit Blähgläsern mit zwei unterschiedlichen Korngrößen, wobei das erste Blähglas eine Korngröße im Bereich von 0,1 bis 0,3 mm aufweist und das zweite Blähglas eine Korngröße im Bereich von 0,25 bis 0,5 mm aufweist und vorzugsweise das Gewichtsverhältnis zwischen erstem Blähglas und zweitem Blähglas im Bereich von 1,5 : 1 bis 1 : 1,5, vorzugsweise 1,05:1 bis 1:1,05 liegt, und besonders bevorzugt 1:1 beträgt und/oder das Gewichtsverhältnis zwischen dem Blähglas bzw. sämtlichen Blähgläsern bei 1:1 bis 1:2, vorzugsweise bei 1:1,5 bis 1:1,9 liegt.

Ein weiterer Aspekt der vorliegenden Erfindung betrifft eine Zusammensetzung zur Herstellung von Formkörpern für die Gießereiindustrie, vorzugsweise zur Herstellung von Speisern für die Gießereiindustrie, besonders bevorzugt zur Herstellung von Speisern für den Aluminiumguss umfassend geschlossen-porige, an ihrer Oberfläche geschlossene Mikro-Kugeln aus expandiertem Perlit (wie oben definiert) als Füllstoff und ein Bindemittel, wobei das Bindemittel ausgewählt ist, aus der Gruppe bestehend aus Wasserglas, Phenol-Formaldehyd-Harzen, Zwei-Komponenten-Systemen, die eine freie Hydroxylgruppen (OH-Gruppen) enthaltende Polyolkomponente (bevorzugt ein Phenolharz) und ein Poly-Isocyanat als Reaktionspartner umfassen, und Stärke. Vorzugsweise handelt es sich um ein organisches Bindemittel, besonders bevorzugt um ein Cold-Box-Bindemittel.

Bei dem Bindemittel handelt es sich vorzugsweise um ein Zwei-Komponenten-Systemen, die eine freie Hydroxylgruppen (OH-Gruppen) enthaltende Polyolkomponente (bevorzugt ein Phenolharz) und ein Poly-Isocyanat als Reaktionspartner umfassen, oder um Wasserglas.

Im Rahmen der vorliegenden Erfindung werden vorzugsweise die für erfindungsgemäße Verwendung beschriebenen Merkmale für geschlossen-porige Mikro-Kugeln aus expandiertem Perlit auch in bevorzugten erfindungsgemäßen Zusammensetzungen verwirklicht.

Erfindungsgemäß bevorzugt wird eine Zusammensetzung, wobei die Mikro-Kugeln erhältlich sind durch ein Verfahren, bei dem Perlitsand in einem Rieselkanal mit mehrstufigen Temperaturzonen aufgebläht wird, wobei die Temperaturzonen des Rieselkanals vorzugsweise elektrisch beheizt werden.

Erfindungsgemäß bevorzugt wird eine Zusammensetzung, wobei die geschlossen-porigen Mikro-Kugeln aus expandiertem Perlit eine Korngröße d50 von 180 bis 300 µm, vorzugsweise von 190 bis 270 µm, besonders bevorzugt von 200 bis 250 µm aufweisen.

Erfindungsgemäß bevorzugt wird eine Zusammensetzung, wobei die geschlossen-porigen Mikro-Kugeln aus expandiertem Perlit
(a) eine Korngröße d10 von 20 bis 170 µm, vorzugsweise von 80 bis 160 µm, besonders bevorzugt von 100 bis 140 µm aufweisen
   und/oder
(b) eine Korngröße d90 von 280 bis 600 µm, vorzugsweise von 290 bis 450 µm, besonders bevorzugt von 300 bis 450 µm aufweisen.

Erfindungsgemäß bevorzugt wird eine Zusammensetzung, umfassend mindestens 30 Gewichtsprozent der Mikro-Kugeln, vorzugsweise 40 Gewichtsprozent, besonders bevorzugt 60 Gewichtsprozent, bezogen auf das Gesamtgewicht der Zusammensetzung.

Ebenfalls bevorzugt ist eine erfindungsgemäße Zusammensetzung zusätzlich umfassend
a) ein Oxidationsmittel, vorzugsweise Kaliumnitrat oder Natriumnitrat, und ein zu oxidierendes Metall und Metalloxid
   und/oder
b) sphärische Partikel, die keine Mikro-Kugeln wie oben definiert sind.

Gemäß einer bevorzugten Ausgestaltung der vorliegenden Erfindung umfasst die erfindungsgemäße Zusammensetzung Bestandteile ausgewählt aus der Gruppe bestehend aus Spheres aus Flugasche, Schaumglas, Quarzsand, kalziniertem Kieselgur, Schamotte, Cordierit und Mullit und Mischungen daraus, vorzugsweise ausgewählt aus der Gruppe bestehend aus Blähglas, Cordierit, kalzinierter Reisschalenasche und Mischungen daraus.

Besonders bevorzugt ist eine erfindungsgemäße Zusammensetzung zusätzlich umfassend Blähglas mit zwei unterschiedlichen Korngrößen. Dabei ist besonders bevorzugt, wenn ein erstes Blähglas eine Korngröße im Bereich von 0,1 bis 0,3 mm aufweist und ein zweites Blähglas eine Korngröße im Bereich von 0,25 bis 0,5 mm aufweist.

Dabei ist eine erfindungsgemäße Zusammensetzung bevorzugt, bei der das Gewichtsverhältnis zwischen erstem Blähglas und zweitem Blähglas im Bereich von 1,5 : 1 bis 1 : 1,5 liegt, vorzugsweise 1,05:1 bis 1:1,05, und bevorzugt 1:1 beträgt
und/oder
das Gewichtsverhältnis zwischen Mikro-Kugeln und dem Blähglas bzw. sämtlichen Blähgläsern bei 1:1 bis 1:2, vorzugsweise bei 1:1,5 bis 1:1,9 liegt.

Erfindungsgemäß besonders bevorzugt ist eine Zusammensetzung umfassend oder bestehend aus geschlossen-porigen Mikro-Kugeln aus expandiertem Perlit, wobei die Mikro-Kugeln an ihrer Oberfläche geschlossen sind und eine Kornfestigkeit von über 1,9 N/mm² aufweisen, und wobei die Mikro-Kugeln in Kombination mit Blähgläsern mit zwei unterschiedlichen Korngrößen vorliegen. Dabei ist besonders bevorzugt, wenn das erste Blähglas eine Korngröße im Bereich von 0,1 bis 0,3 mm aufweist und das zweite Blähglas eine Korngröße im Bereich von 0,25 bis 0,5 mm aufweist und die Mischung aus Mikro-Kugeln und Blähgläsern für die Herstellung von Formkörpern mittels Cold-Box-Verfahren verwendet wird.

Gemäß einer bevorzugten Ausgestaltung der vorliegenden Erfindung umfasst die erfindungsgemäße Zusammensetzung zusätzlich Bestandteile ausgewählt aus der Gruppe bestehend aus Spheres aus Flugasche, Schaumglas, Quarzsand, kalziniertem Kieselgur, Schamotte, Cordierit und Mullit.

Ein weiterer Aspekt der vorliegenden Erfindung betrifft einen Formkörper für die Gießereiindustrie hergestellt unter Verwendung von geschlossen-porigen Mikro-Kugeln aus expandiertem Perlit wie weiter oben definiert oder unter Verwendung einer erfindungsgemäßen Zusammensetzung.

Ein weiterer Aspekt im Zusammenhang mit der vorliegenden Erfindung betrifft ein Verfahren zur Herstellung eines Formkörpers für die Gießereiindustrie, mit folgenden Schritten:
(a) Herstellen oder Bereitstellen von geschlossen-porigen Mikro-Kugeln aus expandiertem Perlit wie oben definiert,
(b) Mischen der in Schritt (a) hergestellten oder bereitgestellten geschlossen-porigen Mikro-Kugeln aus expandiertem Perlit mit einem Bindemittel sowie optional weiteren Bestandteilen zu einer Zusammensetzung und
(c) Formen und Aushärten der Zusammensetzung aus Schritt (b) zu einem Formkörper
oder
(i) Herstellen oder Bereitstellen einer erfindungsgemäßen Zusammensetzung und
(ii) Formen und Aushärten der Zusammensetzung aus Schritt (i) zu einem Formkörper.

Die hier genannten optionalen weiteren Bestandteile umfassen
- Weitere Füllstoffe, bevorzugt ausgewählt aus der Gruppe bestehend aus Spheres aus Flugasche, Schaumglas, Quarzsand, kalziniertem Kieselgur, Schamotte, Cordierit, Mullit und Mischungen daraus, vorzugsweise ausgewählt aus der Gruppe bestehend aus Blähglas, Cordierit, kalzinierter Reisschalenasche und Mischungen daraus,
- ein Oxidationsmittel, vorzugsweise Kaliumnitrat oder Natriumnitrat, und gegebenenfalls ein durch das Oxidationsmittel zu oxidierendes Metall (bevorzugt ausgewählt aus der Gruppe bestehend aus Aluminium, Magnesium, Calcium und Silicium) und Metalloxid.

Besonders bevorzugt ist dabei ein erfindungsgemäßes Verfahren, wobei in Schritt (b) ein organisches oder anorganische Bindemittel oder eine Mischung aus organischem und anorganischem Bindemittel verwendet wird und das Bindemittel vorzugsweise ausgewählt ist aus der Gruppe bestehend aus Wasserglas, Phenol-Formaldehyd-Harzen, Zwei-Komponenten-Systemen, die eine freie Hydroxylgruppen (OH-Gruppen) enthaltende Polyolkomponente (bevorzugt ein Phenolharz) und ein Poly-Isocyanat als Reaktionspartner umfassen, und Stärke.

Insbesondere bevorzugt ist dabei ein erfindungsgemäßes Verfahren, wobei in Schritt (b) oder (i) ein organisches Bindemittel, vorzugsweise ein Cold-Box-Bindemittel, eingesetzt wird und wobei in Schritt (c) oder (ii) das Aushärten gemäß Cold-Box-Verfahren durch Begasung mit einem organischen Amin erfolgt.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

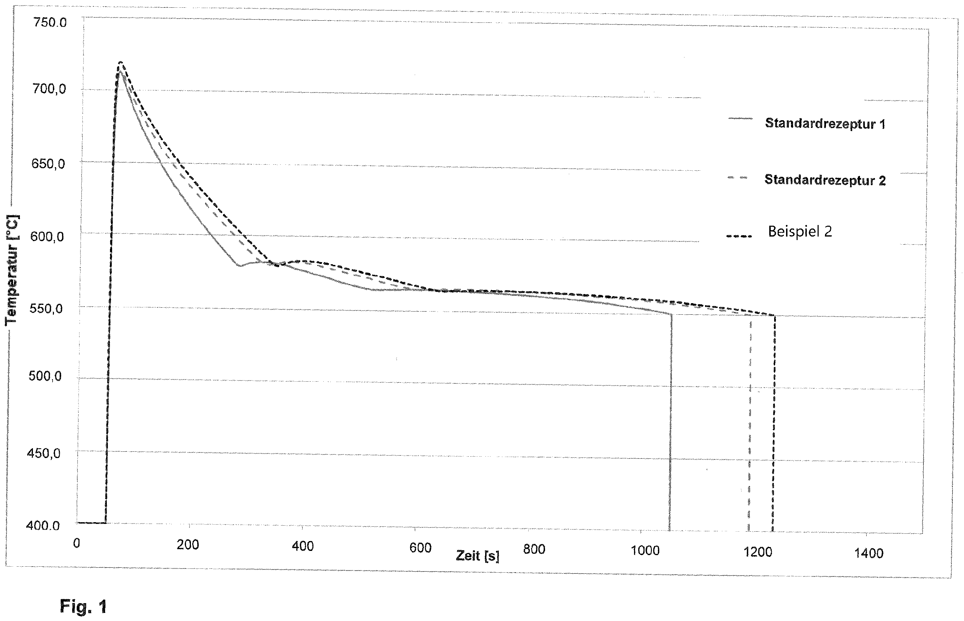

Figur 1 zeigt eine Temperatur-Zeit-Kurve von Beispiel 2 (als Erfindungsgemäß 3 bezeichnet, fette gestrichene Linie) und den Vergleichsbeispielen 2 (als Standardrezeptur 1 bezeichnet, durchgezogene Linie) und 3 (als Standardrezeptur 2 bezeichnet, graue gestrichene Linie). Es zeigt, dass die Temperatur der Aluminiumschmelze in dem hergestellten geschlossenen Speiser länger gehalten wird, d.h. dass die Aluminiumschmelze langsamer abkühlt.

Die vorliegende Erfindung wird nachfolgend durch Beispiele näher erläutert.

### Beispiele:

### Messmethoden:

### 1. Korngrößenbestimmung:

Die Bestimmung der Korngrößen geschlossen-porigen Mikro-Kugeln erfolgt mittels Siebung gemäß DIN 66165-2 (4.1987) unter Anwendung des dort genannten Verfahrens F (Maschinensiebung mit bewegtem Einzelsieb oder Siebsatz in gasförmigem ruhendem Fluid). Es wird eine Vibrationssiebmaschine des Typs RETSCH AS 200 control eingesetzt; dabei wird die Amplitude auf die Stufe 1,8 eingestellt; es erfolgt keine Intervallsiebung 10 Sekunden, die Siebdauer beträgt 5 Minute.

### 2. Bestimmung der Schüttdichte:

Die Schüttdichte wurde nach DIN EN ISO 60 2000-1 bestimmt.

### 3. Bestimmung der chemischen Zusammensetzung und Morphologie:

Die Morphologie der Proben wurde mit Hilfe eines REM der Firma Jeol JSM 6510 durchgeführt. Die chemische Zusammensetzung wurde mit Hilfe einer EDX-Analyse anhand eines EDX der Firma Oxford INCA durchgeführt.

Weiterhin wurde zur Bestimmung der Morphologie ein Lichtmikroskop VisiScope ZTL 350 mit Kamera Visicam 3.0 benutzt.

### 4. Kornfestigkeit:

Die Bestimmung der Kornfestigkeit erfolgte in Anlehnung an die DIN EN 13055-1 Anhang A, Verfahren 1 (2*30 sec rütteln mit Amplitude 0,5mm).

### Beispiel 1 (nicht erfindungsgemäß) und Veraleichsbeispiel 1

Unter Verwendung der in der nachfolgenden Tabelle angegebenen Bestandteile wurden dann nach dem Cold-Box-Verfahren (Katalysator N,N-Dimethylpropylamin) Prüfriegel hergestellt und deren Biegefestigkeit in Anlehnung an VDG Norm P 73, Verfahren A (verwendeter Mischer des Typs BOSCH Profi 67, Verarbeitung bei Raumtemperatur und Raumfeuchte, Herstellung durch Rammen, Erfassung Prüfwerte nach 1h und nach 24h, jeweils Dreifachbestimmung) mit dem Festigkeitsprüfapparat Typ PFG mit Niederdruckmanometer N (mit Motorantrieb) bestimmt.

In Beispiel 1 werden geschlossen-porige Mikro-Kugeln aus geblähtem Perlit mit einer Korngröße d50 von 0,25 mm (d10=0,14 mm, d90=0,40 mm), einer Schüttdichte von 300 g/L verwendet und einer Kornfestigkeit von 2,0 N/mm².

| | Beispiel 1 | Vergleichsbeispiel 1 |
|---|---|---|
| Blähglas 0,1 - 0,3 mm | 30,00 | 30,00 |
| Blähglas 0,25 - 0,50 mm | 30,00 | 30,00 |
| geschlossen-porige Mikro-Kugeln aus geblähtem Perlit | 40,00 | - |
| Cenolite P55120 (offen-poriger, geblähter Perlit) | - | 40,00 |
| Polyisocyanat-Komponente (Aktivator 6324, Hüttenes-Albertus) | 8,00 | 8,00 |
| Benzyletherharz-Komponente (Gasharz 7241, Hüttenes-Albertus) | 8,00 | 8,00 |
| | | |
| Masse Zylinder [g] | 41,5 | 39 |
| Gasdurchlässigkeit | 95 | 105 |
| Biegefestigkeit 1h [N/cm²] | 260 | 120 |
| | 270 | 120 |
| | 270 | 110 |
| Mittelwert Biegefestigkeit 1h [N/cm²] | 267 | 117 |
| Biegefestigkeit 24h [N/cm²] | 280 | 140 |
| | 270 | 120 |
| | 270 | 130 |
| Mittelwert Biegefestigkeit 24h [N/cm²] | 273 | 130 |

Die Mischung aus Beispiel 1 ist für den Einsatz in Speisern geeignet. Die Mischung aus Vergleichsbeispiel 1 ist für den Einsatz in Speisern nicht geeignet, da zu geringe Festigkeiten vorliegen.

### Beispiel 2 (nicht erfindungsgemäß) und Vergleichsbeispiele 2 und 3

Unter Verwendung der in der nachfolgenden Tabelle angegebenen Bestandteile wurden aus jeder Zusammensetzungen nach dem Cold-Box-Verfahren (Katalysator N,N-Dimethylpropylamin) unten geschlossene Speiserkappen hergestellt, wobei die aus den verschiedenen Zusammensetzungen hergestellten Speiserkappen identische Geometrien aufwiesen.

Die hergestellten Speiserkappen werden in einer losen Quarzsandschüttung mittig eingeformt und jeweils mittig mit einem beschichtetem Pt/Rh.Pt Thermoelement versehen. Die Speiserkappen wurden anschließend mit einer Aluminiumschmelze (Al 226) gefüllt, wobei die Badtemperatur der Aluminumschmelze 800 °C betrug. Nach dem eingießen der Aluminiumschmelze in die Speiserkappen wird der Temperaturverlauf aufgezeichnet.

In Beispiel 2 werden geschlossen-porige Mikro-Kugeln aus geblähtem Perlit mit einer Korngröße d50 von 0,25 mm (d10=0,14 mm, d90=0,40 mm), einer Schüttdichte von 300 g/L verwendet und einer Kornfestigkeit von 2,0 N/mm².

| | Beispiel 2 | Vergleichsbeispiel 2 | Vergleichsbeispiel 3 |
|---|---|---|---|
| Spheres | - | 100,0 | 18,0 |
| Blähglas 0,25-0,5mm | 30,0 | - | 30,0 |
| Blähglas 0,1-0,3mm | 30,0 | - | 52,0 |
| geschlossen-porige Mikro-Kugeln aus geblähtem Perlit | 40,0 | - | - |
| Gesamt Trockenmischung [Ms.-%] | 100,0 | 100,0 | 100,0 |
| Polyisocyanat -Komponente (Aktivator 6324, Hüttenes-Albertus) | 8,0 | 8,0 | 7,5 |
| Benzyletherharz-Komponente (Gasharz 7241, Hüttenes-Albertus) | 8,0 | 8,0 | 7,5 |

Figur 1 zeigt eine Temperatur-Zeit-Kurve von Beispiel 2 und der Vergleichsbeispielen 2 (als Standardrezeptur 1 bezeichnet) und 3 (als Standardrezeptur 2 bezeichnet). Der Abguss erfolgte bei jeweils identischen Temperaturen. Es ist zu erkennen, dass die Zusammensetzung aus Beispiel 2 eine bessere Isolationswirkung aufweist als die Zusammensetzungen aus den Vergleichsbeispielen 2 und 3.

### Beispiel 3: Bestimmung der Wasseraufnahme von Perliten nach Enslin:

Die Wasseraufnahme von offen-porigem, geblähten Perlit (Cenolite P55120) und geschlossen-porigen Mikro-Kugeln aus geblähtem Perlit mit geschlossener Oberfläche wurde nach Enslin bestimmt. Die Bestimmung erfolgte an 0,5 g des jeweiligen Schüttgutes mit einem Enslin-Gerät. Die Ergebnisse sind in der nachfolgenden Tabelle zusammengefasst.

| Zeitverlauf [s] | Wasseraufnahme [mL/g] bei geschlossen-porigen Mikro-Kugeln aus geblähtem Perlit | Wasseraufnahme [mL/g] bei offenporigem, geblähten Perlit (Cenolite P55120) |
|---|---|---|
| 30 | 1,1 | 1,6 |
| 40 | 1,1 | 2,0 |
| 60 | 1,1 | 2,1 |
| 120 | 1,1 | 2,1 |
| 180 | 1,1 | 2,1 |
| 300 | 1,1 | 2,1 |

Die Messergebnisse zeigen deutlich, dass die Wasseraufnahme von geschlossen-porigen Mikro-Kugeln aus geblähtem Perlit nur etwa halb so groß ist, wie die Wasseraufnahme des offen-porigen, geblähten Perlits. In die offenen Poren des offen-porigen, geblähten Perlits kann erwartungsgemäß wesentlich mehr Wasser eindringen als bei geschlossen-porigen Mikro-Kugeln aus geblähtem Perlit.

## Patentansprüche

1. Verwendung von geschlossen-porigen, an ihrer Oberfläche geschlossenen Mikro-Kugeln aus expandiertem Perlit als Füllstoff für die Herstellung von Formkörpern für die Gießereiindustrie.

2. Verwendung nach Anspruch 1, wobei die Mikro-Kugeln erhältlich sind durch ein Verfahren, bei dem ein Perlitsand in einem Rieselkanal mit mehrstufigen Temperaturzonen aufgebläht wird, wobei die Temperaturzonen des Rieselkanals vorzugsweise elektrisch beheizt werden.

3. Verwendung nach einem der vorherigen Ansprüche, wobei die Mikro-Kugeln eine Korngröße d50 von 100 bis 400 µm, vorzugsweise von 150 bis 300 µm, besonders bevorzugt von 200 bis 250 µm aufweisen, ermittelt durch Siebung wie in der Anmeldung beschrieben.

4. Verwendung nach einem der vorherigen Ansprüche, wobei die Mikro-Kugeln einen Quotienten aus Reindichte zu Rohdichte von größer als 1,8, vorzugsweise größer als 2,5, besonders bevorzugt größer als 4,0 aufweisen, wobei die Rohdichte und die Reindichte mit dem Heliumpyknometer bestimmt werden.

5. Verwendung nach einem der vorherigen Ansprüche, wobei die Mikro-Kugeln eine Kornfestigkeit von über 1,3 N/mm², vorzugsweise über 1,6 N/mm², besonders bevorzugt über 1,9 N/mm² aufweisen.

6. Verwendung nach Anspruch 1 oder 2, wobei die Mikro-Kugeln eine Schüttdichte von unter 500 kg/m³ aufweisen, vorzugsweise eine Schüttdichte von unter 350 kg/m³, besonders unter 300 kg/m³ aufweisen.

7. Verwendung nach einem der vorherigen Ansprüche, wobei die Mikro-Kugeln in Kombination mit zusätzlichen Bestandteilen verwendet werden ausgewählt aus der Gruppe bestehend aus Spheres aus Flugasche, Schaumglas, Quarzsand, kalziniertem Kieselgur, Schamotte, Cordierit, Mullit und Mischungen daraus.

8. Verwendung nach einem der vorherigen Ansprüche, wobei die Mikro-Kugeln in Kombination mit einem organischen oder anorganischen oder einer Mischung aus organischem und anorganischem Bindemittel verwendet werden und das Bindemittel vorzugsweise ausgewählt ist aus der Gruppe bestehend aus Wasserglas, Phenol-Formaldehyd-Harzen, Zwei-Komponenten-Systemen, die eine freie Hydroxylgruppen (OH-Gruppen) enthaltende Polyolkomponente und ein Poly-Isocyanat als Reaktionspartner umfassen, und Stärke.

9. Verwendung nach einem der vorherigen Ansprüche, wobei die Formkörper für die Gießereiindustrie ausgewählt sind aus der Gruppe bestehend aus isolierenden oder exothermen Speisern, Speiserumhüllungen, Speisereinsätzen, Speiserkappen, Fülltrichtern, Zufuhrelementen und Heizkissen.

10. Verwendung nach einem der vorherigen Ansprüche zur Herstellung von isolierenden oder exothermen Speisern für den Nicht-Eisenguss, vorzugsweise isolierende Speiser für den Aluminiumguss.

11. Zusammensetzung zur Herstellung von Formkörpern für die Gießereiindustrie, vorzugsweise zur Herstellung von Speisern für die Gießereiindustrie, besonders bevorzugt zur Herstellung von Speisern für den Aluminiumguss, umfassend geschlossen-porige, an ihrer Oberfläche geschlossene Mikro-Kugeln aus expandiertem Perlit als Füllstoff und ein Bindemittel, wobei das Bindemittel ausgewählt ist aus der Gruppe bestehend aus Wasserglas, Phenol-Formaldehyd-Harzen, Zwei-Komponenten-Systemen, die eine freie Hydroxylgruppen (OH-Gruppen) enthaltende Polyolkomponente und ein Poly-Isocyanat als Reaktionspartner umfassen, und Stärke.

12. Zusammensetzung nach Anspruch 11, wobei die Mikro-Kugeln erhältlich sind durch ein Verfahren, bei dem Perlitsand in einem Rieselkanal mit mehrstufigen Temperaturzonen aufgebläht wird, wobei die Temperaturzonen des Rieselkanals vorzugsweise elektrisch beheizt werden.

13. Zusammensetzung nach einem der Ansprüche 11 oder 12 zusätzlich umfassend Bestandteile ausgewählt aus der Gruppe bestehend aus Spheres aus Flugasche, Schaumglas, Quarzsand, kalziniertem Kieselgur, Schamotte, Cordierit und Mullit und Mischungen daraus.

14. Formkörper für die Gießereiindustrie hergestellt unter Verwendung von geschlossen-porigen Mikro-Kugeln aus expandiertem Perlit wie in einem der Ansprüche 1 bis 10 definiert oder unter Verwendung einer Zusammensetzung nach einem der Ansprüche 11 bis 13.

15. Verfahren zur Herstellung eines Formkörpers für die Gießereiindustrie, mit folgenden Schritten:
(a) Herstellen oder Bereitstellen von geschlossen-porigen Mikro-Kugeln aus expandiertem Perlit wie in einem der Ansprüche 1 bis 10 definiert,
(b) Mischen der in Schritt (a) hergestellten oder bereitgestellten geschlossen-porigen Mikro-Kugeln aus expandiertem Perlit mit einem Bindemittel sowie optional weiteren Bestandteilen zu einer Zusammensetzung und
(c) Formen und Aushärten der Zusammensetzung aus Schritt (b) zu einem Formkörper
oder
(i) Herstellen oder Bereitstellen einer Zusammensetzung nach einem der Ansprüche 11 bis 13 und
(ii) Formen und Aushärten der Zusammensetzung aus Schritt (i) zu einem Formkörper.

## Claims

1. Use of closed-pore microspheres of expanded perlite which are closed on their surface as a filler for producing mouldings for the foundry industry.

2. Use according to Claim 1, wherein the microspheres are obtainable by a process in which a perlite sand is expanded in a trickle channel having multistage temperature zones, the temperature zones of the trickle channel being preferably electrically heated.

3. Use according to either of the preceding claims, wherein the microspheres have a particle size d50 of 100 to 400 µm, preferably of 150 to 300 µm, more preferably of 200 to 250 µm, determined by sieving as described in the patent application.

4. Use according to any of the preceding claims, wherein the microspheres have a ratio of pure density to apparent density of greater than 1.8, preferably greater than 2.5, more preferably greater than 4.0, the apparent density and the pure density being determined with the helium pyknometer.

5. Use according to any of the preceding claims, wherein the microspheres have a particle strength of above 1.3 N/mm², preferably above 1.6 N/mm², more preferably above 1.9 N/mm².

6. Use according to Claim 1 or 2, wherein the microspheres have a bulk density of below 500 kg/m³, preferably a bulk density of below 350 kg/m³, particularly below 300 kg/m³.

7. Use according to any of the preceding claims, wherein the microspheres are used in combination with additional constituents selected from the group consisting of spheres of flyash, foamed glass, quartz sand, calcined kieselguhr, schamotte, cordierite, mullite, and mixtures thereof.

8. Use according to any of the preceding claims, wherein the microspheres are used in combination with an organic or inorganic binder or with a mixture of organic and inorganic binder and the binder is preferably selected from the group consisting of water glass, phenol-formaldehyde resins, two-component systems comprising as reactants a polyisocyanate and a polyol component containing free hydroxyl groups (OH groups), and starch.

9. Use according to any of the preceding claims, wherein the mouldings for the foundry industry are selected from the group consisting of insulating or exothermic feeders, feeder surrounds, feeder sleeves, feeder caps, filling funnels, supply elements, and heating pads.

10. Use according to any of the preceding claims for producing insulating or exothermic feeders for nonferrous casting, preferably insulating feeders for aluminium casting.

11. Composition for producing mouldings for the foundry industry, preferably for producing feeders for the foundry industry, more preferably for producing feeders for aluminium casting, comprising closed-pore microspheres of expanded perlite which are closed on their surface as a filler, and a binder, the binder being selected from the group consisting of water glass, phenol-formaldehyde resins, two-component systems comprising as reactants a polyisocyanate and a polyol component containing free hydroxyl groups (OH groups), and starch.

12. Composition according to Claim 11, wherein the microspheres are obtainable by a process in which perlite sand is expanded in a trickle channel having multistage temperature zones, the temperature zones of the trickle channel being preferably electrically heated.

13. Composition according to either of Claims 11 and 12, further comprising constituents selected from the group consisting of spheres of flyash, foamed glass, quartz sand, calcined kieselguhr, schamotte, cordierite and mullite, and mixtures thereof.

14. Moulding for the foundry industry, produced using closed-pore microspheres of expanded perlite as defined in any of Claims 1 to 10 or using a composition according to any of Claims 11 to 13.

15. Process for producing a moulding for the foundry industry, having the following steps:
(a) producing or providing closed-pore microspheres of expanded perlite as defined in any of Claims 1 to 10,
(b) mixing the closed-pore microspheres of expanded perlite, produced or provided in step (a), with a binder and also optionally further constituents to give a composition, and
(c) moulding and curing the composition from step (b) to give a moulding
or
(i) producing or providing a composition according to any of Claims 11 to 13, and
(ii) moulding and curing the composition from step (i) to give a moulding.

## Revendications

1. Utilisation de microbilles à pores fermés, fermées sur leur surface, en perlite expansée en tant que charge pour la fabrication de corps moulés pour l'industrie de la fonderie.

2. Utilisation selon la revendication 1, dans laquelle les microbilles peuvent être obtenues par un procédé où un sable de perlite est gonflé dans un canal d'écoulement avec des zones progressives de température, dans laquelle les zones de température du canal d'écoulement sont chauffées de préférence de manière électrique.

3. Utilisation selon l'une quelconque des revendications précédentes, dans laquelle les microbilles présentent une granulométrie d50 de 100 à 400 µm, de préférence de 150 à 300 µm, de manière particulièrement préférée de 200 à 250 µm, déterminée par tamisage tel que décrit dans la demande.

4. Utilisation selon l'une quelconque des revendications précédentes, dans laquelle les microbilles présentent un quotient entre masse volumique vraie et masse volumique apparente supérieur à 1,8, de préférence supérieur à 2,5, de manière particulièrement préférée supérieur à 4,0, dans laquelle la masse volumique apparente et la masse volumique vraie sont définies avec un pycnomètre à hélium.

5. Utilisation selon l'une quelconque des revendications précédentes, dans laquelle les microbilles présentent une solidité granulaire supérieure à 1,3 N/mm², de préférence supérieure à 1,6 N/mm², de manière particulièrement préférée supérieure à 1,9 N/mm².

6. Utilisation selon la revendication 1 ou 2, dans laquelle les microbilles présentent une masse volumique apparente inférieure à 350 kg/m³, en particulier inférieure à 300 kg/m³.

7. Utilisation selon l'une quelconque des revendications précédentes, dans laquelle les microbilles sont utilisées en combinaison avec des constituants supplémentaires choisis parmi le groupe constitué de sphères de cendres volantes, de verre cellulaire, de sable de quartz, de terre à diatomées calcinée, d'argile réfractaire, de cordiérite, de mullite et de mélange de ceux-ci.

8. Utilisation selon l'une quelconque des revendications précédentes, dans laquelle les microbilles sont utilisées en combinaison avec un liant organique ou inorganique ou un mélange de liant organique et de liant inorganique et le liant est choisi de préférence parmi le groupe constitué de verre soluble, de résines de phénol-formaldéhyde, de systèmes à deux composants, qui comprennent en tant que partenaires réactionnels un composant à base de polyol contenant des groupes hydroxyle (groupes OH) libres et un polyisocyanate, et de l'amidon.

9. Utilisation selon l'une quelconque des revendications précédentes, dans laquelle les corps moulés pour l'industrie de la fonderie sont choisis parmi le groupe constitué de masselottes isolantes ou exothermes, d'enveloppes de masselotte, d'inserts de masselotte, de corps de masselotte, de trémies de remplissage, d'éléments d'amenée et de coussins chauffants.

10. Utilisation selon l'une quelconque des revendications précédentes, pour fabriquer des masselottes isolantes ou exothermes pour le coulage sans fer, de préférence des masselottes isolantes pour le coulage d'aluminium.

11. Composition pour fabriquer des corps moulés pour l'industrie de la fonderie, de préférence pour fabriquer des masselottes pour l'industrie de la fonderie, de manière particulièrement préférée pour fabriquer des masselottes pour le coulage d'aluminium, comprenant des microbilles à pores fermés, ouvertes sur leur surface, en perlite expansée en tant que charge et un liant, dans laquelle le liant est choisi parmi le groupe constitué de verre soluble, de résines de phénol-formaldéhyde, de systèmes à deux composants, qui comprennent en tant que partenaires réactionnels un composant à base de polyol contenant des groupes hydroxyles (groupes OH) libres et un polyisocyanate, et de l'amidon.

12. Composition selon la revendication 11, dans laquelle les microbilles peuvent être obtenues par un procédé où du sable de perlite est gonflé dans un canal d'écoulement avec des zones progressives de température, dans laquelle les zones de température du canal d'écoulement sont chauffées de préférence de manière électrique.

13. Composition selon l'une quelconque des revendications 11 ou 12 comprenant en supplément des constituants choisis parmi le groupe constitué de sphères de cendres volantes, de verre cellulaire, de sable de quartz, de terre à diatomées calcinée, d'argile réfractaire, de cordiérite, et de mullite et de mélange de ceux-ci.

14. Corps moulé pour l'industrie de la fonderie grâce à l'utilisation de microbilles à pores fermés en perlite expansée telle que définie dans l'une quelconque des revendications 1 à 10 ou grâce à l'utilisation d'une composition selon l'une quelconque des revendications 11 à 13.

15. Procédé pour fabriquer un corps moulé pour l'industrie de la fonderie, avec des étapes suivantes :
(a) fabrication ou de fourniture de microbilles à pores fermés en perlite expansée tel que cela est défini dans l'une quelconque des revendications 1 à 10,
(b) mélange des microbilles à pores fermés en perlite expansée fabriquées ou fournies lors de l'étape (a) avec un liant ainsi qu'en option d'autres constituants en une composition, et
(c) moulage et durcissement de la composition issue de l'étape (b) en un corps moulé,
ou
(i) fabrication ou fourniture d'une composition selon l'une quelconque des revendications 11 à 13, et
(ii) moulage et durcissement de la composition issue de l'étape (i) en un corps moulé.
